# EUROPEAN PATENT SPECIFICATION

(11) **EP 4 372 876 B1**
(45) Date of publication and mention of the grant of the patent: **02.07.2025**
(21) Application number: 22208060.8
(22) Date of filing: 17.11.2022
(51) Int. Cl.: H01M 50/202, H01M 50/244, H01M 50/249, H01M 50/262, H01M 50/271, H01M 50/209

(54) **FASTENING DEVICE FOR A BATTERY PACK, BATTERY PACK AND METHOD**
BEFESTIGUNGSVORRICHTUNG FÜR EIN BATTERIEPACK, BATTERIEPACK UND VERFAHREN
DISPOSITIF DE FIXATION POUR UN BLOC-BATTERIE, BLOC-BATTERIE ET PROCÉDÉ

(43) Date of publication of application: 22.05.2024
(73) Proprietor: VOLVO TRUCK CORPORATION, 405 08 Göteborg (SE)
(72) Inventor: LUNDIN, Robert, 417 29 GÖTEBORG (SE)
(74) Representative: Kransell & Wennborg KB

(56) References cited:
- EP-A2- 2 072 308
- WO-A1-2020/030649
- CN-A- 114 069 138
- CN-A- 114 530 665
- CN-A- 115 084 754
- DE-A1- 102012 217 248
- US-A1- 2020 070 670
- US-A1- 2021 178 913

## Description

### TECHNICAL FIELD

The disclosure relates generally to a battery pack. In particular aspects, the disclosure relates to a battery pack fastening arrangement, a battery pack comprising such a fastening arrangement and a fastening method. The disclosure can be applied in heavy-duty vehicles, such as trucks, buses, and construction equipment. Although the disclosure may be described with respect to a particular vehicle, the disclosure is not restricted to any particular vehicle. The disclosure could also be applied in stationary applications.

### BACKGROUND

Electrical storage systems are used to store energy for subsequent use. One example of an electrical storage system is a battery, such as a rechargeable battery for an electric vehicle.

An electrical storage system can comprise one or several battery packs. Each battery pack in turn comprises a plurality of battery cells. The battery cells are sometimes grouped together to form battery modules. By letting the battery pack consist of several battery modules, parts of the battery pack can be replaced without replacing the entire battery pack.

The battery pack generally comprises a structure for supporting the battery modules within the battery pack, such as a battery pack cover. The battery modules are thus attached to the battery pack cover which fixedly retains the battery modules within the vehicle. The arrangement for fastening the battery module to the battery pack cover should preferably be able to compensate for tolerance differences of the battery pack cover and the battery module. WO 2020/030649 A1 discloses a fixing element protruding from a housing.

A previous solution includes assembling of the battery module tight towards one side of the battery pack cover and arranging a tolerance compensating fastener, such as a tolerance compensating screw, to the opposite side of the battery pack cover.

One problem with this solution is that momentum is introduced along the fastener axis, whereby there is a risk that the threads are worn out resulting in unfastening of the fastener. Another problem with this solution is that assembly and removal of a battery module in the battery cover is complicated.

The present solution aims at providing a fastening device which at least partly overcomes these previous problems.

### SUMMARY

According to the invention, a fastening device configured to fasten a battery module to a battery pack cover is provided, the fastening device comprising a fixating member adapted to be received within, and protrude from, a recess of the battery module, a first fastener adapted to fasten the fixating member to the battery pack cover and a second fastener adapted to fasten the fixating member to the battery module, for securement within the recess of the battery module. A fastening direction of the first fastener is perpendicular to a fastening direction of the second fastener, and the first fastener is configured to move the fixating member into contact with the battery pack cover.

The invention seeks to provide an improved tolerance compensating fastening device for a battery pack. A technical benefit may include that the fastening device can be used for tolerance compensation, but without the risk of unfastening as the fixating member prevents momentum from being induced in the fasteners.

**In** an advantageous embodiment, the fixating member is plate shaped.

In an advantageous embodiment, the first fastener comprises a first threaded fastener, and the fixating member comprises a first threaded aperture for receiving the first threaded fastener. A technical benefit may include that the threaded fastener can be used to move the fixating member into tight contact with the battery pack cover and hold it there without the addition of further parts.

In an advantageous embodiment, the second fastener comprises a second threaded fastener, and the fixating member comprises a second threaded aperture for receiving the second threaded fastener.

According to the invention, a method for attaching a battery module to a battery pack cover is provided, the method comprising:
- providing a battery pack cover, a battery module and a fastening device, the fastening device comprising a fixating member adapted to be received within, and protrude from, a recess of the battery module, a first fastener adapted to fasten the fixating member to the battery pack cover, and a second fastener adapted to fasten the fixating member to the battery module, for securement within the recess of the battery module,
- arranging the fixating member of the fastening device in the recess of the battery module, allowing part of the fixating member to protrude from the recess,
- fastening the first fastener, thereby moving the fixating member into contact with the battery pack cover, and
- fastening the second fastener to fasten the fixating member within the recess of the battery module.

The invention seeks to provide an improved method for assembling a battery pack. A technical benefit may include that the fixating member can be arranged within the recess prior to positioning the battery module in the battery pack, and then moved into place with the first fastener. Thereby, assembly of the battery pack may be facilitated, while tolerances are accounted for.

In an advantageous embodiment, the first fastener comprises a first threaded fastener, and the fixating member comprises a first threaded aperture for receiving the first threaded fastener. A technical benefit may include that the threaded fastener can be used to move the fixating member into tight contact with the battery pack cover and hold it there without the addition of further parts.

In an advantageous embodiment, the second fastener comprises a second threaded fastener, and the fixating member comprises a second threaded aperture for receiving the second threaded fastener.

According to the invention, a battery pack for an electrical storage system is provided, the battery pack comprising a battery pack cover, a battery module and a fastening device, the fastening device comprising a fixating member, the fixating member being received within, and protruding from, a recess of the battery module. The fastening device of the third aspect further comprises a first fastener for fastening the fixating member to the battery pack cover, and a second fastener for fastening the fixating member to the battery module, for securement within the recess of the battery module. A fastening direction of the first fastener is perpendicular to a fastening direction of the second fastener and the first fastener is configured to move the fixating member into contact with the battery pack cover.

In an advantageous embodiment, the first fastener comprises a first threaded fastener, the fixating member comprises a first threaded aperture for receiving the first fastener, and the battery pack cover comprises a first through-hole for attaching the first threaded fastener to the battery pack cover.

In an advantageous embodiment, the second fastener comprises a second threaded fastener, the fixating member comprises a second threaded aperture for receiving the second threaded fastener, and the battery module comprises a second through-hole for attaching the second threaded fastener to the battery module.

In an advantageous embodiment, an extension of the second through-hole exceeds a length of the second fastener in the first fastening direction to allow fastening of the fixating member at different positions within the recess of the battery module.

A technical benefit may include that the second fastener can be positioned in varying positions to adapt to the position of the fixating member.

In an advantageous embodiment, the battery pack further comprises a first engaging member arranged at the battery module, a second engaging member arranged at the battery pack cover, and a third fastener wherein the first engaging member is configured to engage with the second engaging member to fixate the battery module to the battery pack cover in a first battery pack direction and a second battery pack direction, and the third fastener extending through the battery module to fixate the battery module to the battery pack cover in a third battery pack direction.

A technical benefit may include that the engaging members can be used to guide the battery module into a correct position and hold it there while fastening the fasteners.

In an advantageous embodiment, the first engaging member comprises a first protrusion and the second engaging member comprises a second protrusion, the second protrusion comprising a recess configured to engage with the first protrusion.

In an advantageous embodiment, the third fastener is a threaded fastener.

In an advantageous embodiment, the battery module comprises a third through-hole for attaching the third fastener to the battery module.

In an advantageous embodiment, the battery pack cover comprises a third threaded aperture for receiving the third fastener.

According an advantageous embodiment, an electrical storage system comprising a battery pack in accordance with the present disclosure is provided.

According to an advantageous embodiment, a vehicle comprising an electrical storage system in accordance with the present disclosure is provided.

The above embodiments, accompanying claims, and/or examples disclosed herein above and later below may be suitably combined with each other as would be apparent to anyone of ordinary skill in the art.

Additional features and benefits are disclosed in the following description, claims, and drawings, and in part will be readily apparent therefrom to those skilled in the art or recognized by practicing the disclosure as described herein. The scope of protection is defined by the appended claims.

### BRIEF DESCRIPTION OF THE DRAWINGS

With reference to the appended drawings, below follows a more detailed description of aspects of the disclosure cited as examples.
**FIG. 1** is a perspective view of an exemplary battery pack fastening device
**FIG. 2** is a top view of an exemplary battery pack fastening device
**FIG. 3** is a top view of an exemplary battery pack fastening device according to a second example example
**FIG. 4** is an exemplary method for fastening a battery module of a battery pack

### DETAILED DESCRIPTION

Aspects set forth below represent the necessary information to enable those skilled in the art to practice the disclosure.

The present disclosure aims at providing a fastening device which can be used for tolerance compensation without being subjected to unfastening. This is solved by a fastening device, battery pack and method as described below in relation to the disclosed figures.

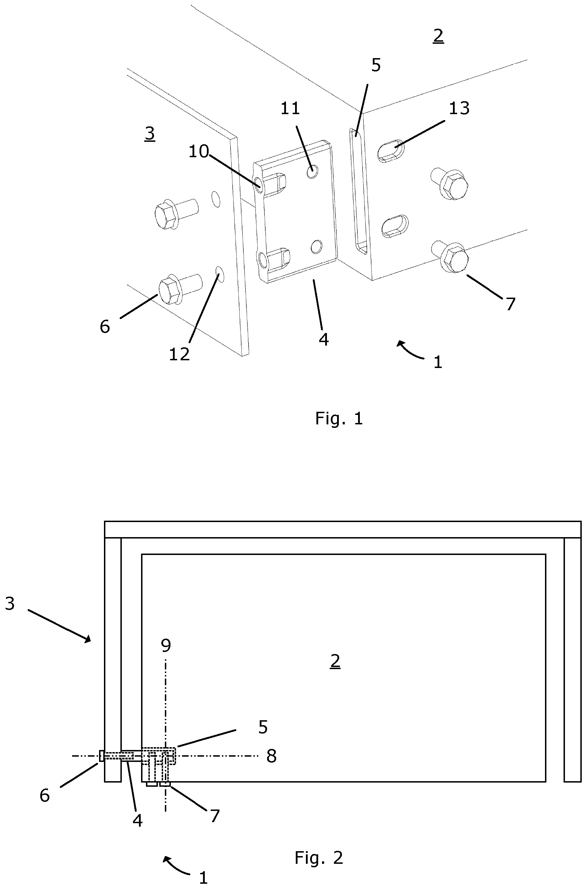

**Fig. 1** shows a fastening device **1** for fastening of a battery module **2** to a battery pack cover **3.** The fastening device **1** is arranged at a corner of the battery module **2** and may cooperate with additional fastening means for attaching the battery module **2.** The fastening device **1** comprises a fixating member **4.** The fixating member **4** is used to overcome a play between the battery module **2** and the battery pack cover **3.** The play may be a result of tolerance differences during production.

The fixating member **4** is adapted to be received within a recess **5** of the battery module **2.** The recess **5** is arranged in a side wall of the battery module **2** and is slightly shorter than the fixating member **4** such that the fixating member **4** protrudes from the recess **5** when being arranged within the recess **5.**

The fixating member **4** is in the example fastened to the battery pack cover **3** with a pair of fasteners **6,** such as a pair of bolts. The bolts extend through through-holes **12** of the battery pack cover **3** and is received by threaded apertures **10,** the threaded apertures **10** comprising threads on an inner wall surface thereof and being disposed at one side of the fixating member **4.** Fastening of the bolts moves the fixating member **4** into contact with the battery pack cover **3.** The contact between the fixating member **4** and the battery pack cover **3,** induced by the bolts, creates friction between the inner surface of the battery pack cover **3** and a side of the fixating member **4.** Thereby movement of the fastening device **1,** and momentum along the fastening direction of the first fasteners **6** can be avoided, by still adapting to tolerance differences.

The fastening device **1** of **Fig. 1** further comprises a second fastener **7,** in this case exemplified as a second pair of bolts. The bolts extend through a second pair of through-holes **13** and are received in threaded apertures **11** of the fixating member **4,** the threaded apertures **11** comprising threads on an inner wall surface thereof. The second fastener **7** thus fastens the fixating member **4** to the battery module **2** within the recess **5,** and the battery module **2** is thereby fastened to the battery pack cover **3** via the fastening device **1.** The second through-holes **13** has a form which allows the second fastener **7** to adjust its position based on the position of the fixating member **4,** thus being able to compensate for tolerance differences.

**Fig. 2** shows a battery pack with a fastening device **1** in top view. In **Fig. 2** the battery pack comprises a battery pack cover **3** surrounding the battery module **2** on at least three sides, and an opening at a fourth side. The opening is used for assembling the battery module **2** to the battery pack cover **3.** The battery module **2** can thus be pushed into the battery pack cover **3** through the opening, whereby the fastening device **1** is used to fasten the battery module **2** to the battery pack cover **3.** The fastening device **1** is exemplified as being arranged at a corner of the battery pack adjacent to the opening, where it can be easily accessed during assembly.

In **Fig. 2****,** the fastening direction **8** of the first fastener **6** is perpendicular to the fastening direction 9 of the second fastener **7.** The fixating member **4** is thereby attached from at least two direction which allows the fixating member **4** to be moved in the first fastening direction **8** using the first fastener **6** to compensate for tolerance differences, before being fastened in the second fastening direction **9** using the second fastener **7.**

The recess **5** is in **Fig. 2** shown to extend beyond the fixating member **4** when in fastened position. This is to allow the fixating member **4** to adjust its position within the recess **5** to compensate for tolerance differences.

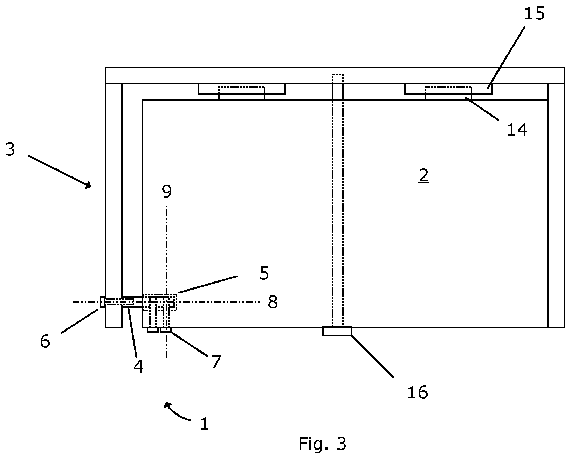

**Fig. 3** shows the battery pack in top view according to a further example. In this example, additional fastening members is used to fasten the battery module **2** to the battery pack cover **3.** The additional fastening members comprise a first engaging member **14** arranged on the battery module **2,** a second engaging member **15** arranged on the battery pack cover **3,** and a third fastener **16** extending through the battery module **2.**

The additional fastening members could thus be used to further secure the battery module **2** to the battery pack cover **3** when needed. According to the solution shown in **Fig. 3** the first engaging member **14** comprises a pair of first protrusions arranged on the battery module **2,** the first protrusions being adapted to engage with a pair of second engaging members **15** of the battery cover **3,** the second engaging members **15** comprising a second pair of protrusions, the second protrusions comprising a central groove for receiving the first protrusions. The first and second engaging members **14, 15** thus fixate the battery module **2** to the battery cover **3** in a first and second battery pack direction. Alternatively, the engaging members **14, 15** could be constructed in other ways as long as they fixate the battery module **2** to the battery pack cover **3** in at least two directions. For example, the groove could instead be provided on the first engagement members **14.** The third fastener **16,** which in the present example is exemplified as a bolt, further fastens the battery module in a third battery pack direction.

It is understood that the examples of **Fig. 2** and **Fig. 3** may comprise further additional fastening devices. For example, the fastening device **1** could alternatively be arranged to fasten the side of the battery module being opposite to that shown in in **Fig. 2** and **Fig. 3****.** However, this side could alternatively be secured tightly to the battery cover **3** without the use of any additional tolerance compensating device.

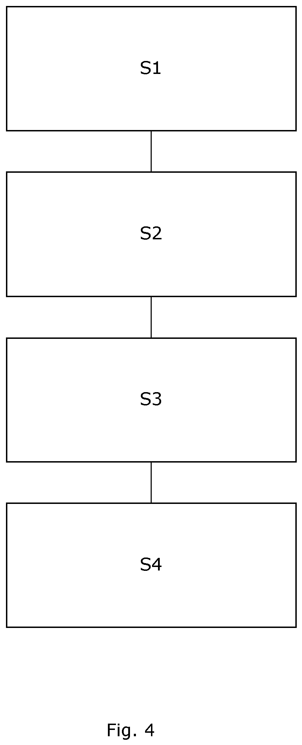

**In** **Fig. 4** a method for fastening a battery module **2** to a battery pack cover **3** using a fastening device **1** is illustrated. In step **S1** a battery module, a battery pack cover **3** and a fastening device **1** in accordance with the present disclosure are provided. In step **S2** the fixating device **4** of the fastening device **1** is inserted into the recess **5** of the battery module **2.** Preferably, the fixating member **4** is arranged within the recess **5** prior to positioning the battery module **2** into the battery pack cover **3.** When the battery module **2** has been positioned in the battery pack cover **3** the first fastener **6** is fastened **S3.** The fastening **S3** of the first fastener **6** moves the fixating member **4** towards and into contact with the cover **3.** The fixating member **4** is guided by the walls of the recess **5** during the movement, so that the fixating member **5** slides linearly towards the cover **3.** After having positioned the fixating member **4** in relation to the cover **3** by use of the first fastener **6,** the second fastener **7** is fastened **S4** which fastens the fixating member **4** to the battery module **2.**

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of protection being defined by the appended claims.

## Claims

1. A fastening device (1) configured to fasten a battery module (2) to a battery pack cover (3), the fastening device (1) comprising
a fixating member (4) adapted to be received within, and protrude from, a recess (5) of the battery module (2),
a first fastener (6) adapted to fasten the fixating member (4) to the battery pack cover (3), and
a second fastener (7) adapted to fasten the fixating member (4) to the battery module (2), for securement within the recess (5) of the battery module (2),
wherein a fastening direction (8) of the first fastener (6) is perpendicular to a fastening direction (9) of the second fastener (7), and
wherein the first fastener (6) is configured to move the fixating member (4) into contact with the battery pack cover (3).

2. The fastening device (1) according to claim 1, wherein the fixating member (4) is plate shaped.

3. The fastening device (1) according to any of claims 1-2, wherein the first fastener (6) comprises a first threaded fastener, and wherein the fixating member (4) comprises a first threaded aperture (10) for receiving the first threaded fastener.

4. The fastening device (1) according to any of claims 1-3, wherein the second fastener (7) comprises a second threaded fastener, and wherein the fixating member (4) comprises a second threaded aperture (11) for receiving the second threaded fastener.

5. A method for attaching a battery module (2) to a battery pack cover (3), the method comprising
- providing (S1) a battery pack cover (3), a battery module (2) and a fastening device (1), the fastening device (1) comprising
a fixating member (4) adapted to be received within, and protrude from, a recess (5) of the battery module (2),
a first fastener (6) adapted to fasten the fixating member (4) to the battery pack cover (3), and
a second fastener (7) adapted to fasten the fixating member (4) to the battery module (2), for securement within the recess (5) of the battery module (2),
- arranging (S2) the fixating member (4) of the fastening device (1) in the recess (5) of the battery module (2), allowing part of the fixating member (4) to protrude from the recess,
- fastening (S3) the first fastener (6), thereby moving the fixating member (4) into contact with the battery pack cover (3), and
- fastening (S4) the second fastener (7) to fasten the fixating member (4) within the recess (5) of the battery module (2).

6. The method according to claim 5, wherein the fixating member (4) is plate shaped.

7. The method according to any of claims 5-6, wherein the first fastener (6) comprises a first threaded fastener, and wherein the fixating member (4) comprises a first threaded aperture (10) for receiving the first threaded fastener (6).

8. The method according to any of claims 6-7, wherein the second fastener (7) comprises a second threaded fastener, and wherein the fixating member (4) comprises a second threaded aperture (11) for receiving the second threaded fastener.

9. A battery pack for an electrical storage system, the battery pack comprising
a battery pack cover (3),
a battery module (2), and
a fastening device (1), the fastening device (1) comprising
a fixating member (4), the fixating member (4) being received within, and protruding from, a recess (5) of the battery module (2),
a first fastener (6) for fastening the fixating member (4) to the battery pack cover (3), and
a second fastener (7) for fastening the fixating member (4) to the battery module (2), for securement within the recess (5) of the battery module (2),
wherein a fastening direction (8) of the first fastener (6) is perpendicular to a fastening direction (9) of the second fastener (7), and
wherein the first fastener (6) is configured to move the fixating member (5) into contact with the battery pack cover (3).

10. The battery pack according to claim 9, wherein the first fastener (6) comprises a first threaded fastener, wherein the fixating member (4) comprises a first threaded aperture (10) for receiving the first fastener (6), and wherein the battery pack cover (3) comprises a first through-hole (12) for attaching the first fastener (6) to the battery pack cover (3).

11. The battery pack according to any of claims 9-10, wherein the second fastener (7) comprises a second threaded fastener, wherein the fixating member (4) comprises a second threaded aperture (11) for receiving the second threaded fastener, and wherein the battery module (2) comprises a second through-hole (13) for attaching the second threaded fastener to the battery module (2).

12. The battery pack according to claim 11, wherein an extension of the second through-hole (13) exceeds a length of the second fastener (6) in the first fastening direction (8) to allow fastening of the fixating member (4) at different positions within the recess (5) of the battery module (2).

13. The battery pack according to any of claims 9-12 further comprising
a first engaging member (14) arranged at the battery module,
a second engaging member (15) arranged at the battery pack cover, and
a third fastener (16),
wherein the first engaging member (14) is configured to engage with the second engaging member (15) to fixate the battery module (2) to the battery pack cover (3) in a first battery pack direction and a second battery pack direction, and
wherein the third fastener (16) extends through the battery module (2) to fixate the battery module (2) to the battery pack cover (3) in a third battery pack direction.

14. An electrical storage system comprising the battery pack according to claim 9.

15. A vehicle comprising the electrical storage system according to claim 14.

## Patentansprüche

1. Befestigungsvorrichtung (1), die konfiguriert ist, um ein Batteriemodul (2) an einer Batteriepackabdeckung (3) zu befestigen, die Befestigungsvorrichtung (1) umfassend
ein Befestigungselement (4), das so angepasst ist, dass es in einer Aussparung (5) des Batteriemoduls (2) aufgenommen wird und aus dieser hervorsteht,
ein erstes Befestigungsmittel (6), das angepasst ist, um das Befestigungselement (4) an der Batteriepackabdeckung (3) zu befestigen, und
ein zweites Befestigungsmittel (7), das angepasst ist, um das Befestigungselement (4) an dem Batteriemodul (2) zu befestigen, um es in der Aussparung (5) des Batteriemoduls (2) zu sichern,
wobei eine Befestigungsrichtung (8) des ersten Befestigungsmittels (6) senkrecht zu einer Befestigungsrichtung (9) des zweiten Befestigungsmittels (7) ist, und
wobei das erste Befestigungsmittel (6) konfiguriert ist, um das Befestigungselement (4) in Kontakt mit der Batteriepackabdeckung (3) zu bringen.

2. Befestigungsvorrichtung (1) nach Anspruch 1, wobei das Befestigungselement (4) plattenförmig ist.

3. Befestigungsvorrichtung (1) nach einem der Ansprüche 1-2, wobei das erste Befestigungsmittel (6) ein erstes mit Gewinde versehenes Befestigungsmittel umfasst und wobei das Befestigungselement (4) eine erste mit Gewinde versehene Öffnung (10) zur Aufnahme des ersten mit Gewinde versehenen Befestigungsmittels umfasst.

4. Befestigungsvorrichtung (1) nach einem der Ansprüche 1-3, wobei das zweite Befestigungsmittel (7) ein zweites mit Gewinde versehenes Befestigungsmittel umfasst, und wobei das Befestigungselement (4) eine zweite mit Gewinde versehene Öffnung (11) zur Aufnahme des zweiten mit Gewinde versehenen Befestigungsmittels umfasst.

5. Verfahren zum Befestigen eines Batteriemoduls (2) an einer Batteriepackabdeckung (3), das Verfahren umfassend
- Bereitstellen (S1) einer Batteriepackabdeckung (3), eines Batteriemoduls (2) und einer Befestigungsvorrichtung (1), die Befestigungsvorrichtung (1) umfassend
ein Befestigungselement (4), das so angepasst ist, dass es in einer Aussparung (5) des Batteriemoduls (2) aufgenommen wird und aus dieser hervorsteht,
ein erstes Befestigungsmittel (6), das angepasst ist, um das Befestigungselement (4) an der Batteriepackabdeckung (3) zu befestigen, und
ein zweites Befestigungsmittel (7), das angepasst ist, um das Befestigungselement (4) an dem Batteriemodul (2) zu befestigen, um es in der Aussparung (5) des Batteriemoduls (2) zu sichern,
- Anordnen (S2) des Befestigungselements (4) der Befestigungsvorrichtung (1) in der Aussparung (5) des Batteriemoduls (2), wobei ein Teil des Befestigungselements (4) aus der Aussparung herausragen kann,
- Befestigen (S3) des ersten Befestigungsmittels (6), wodurch das Befestigungselement (4) in Kontakt mit der Batteriepackabdeckung (3) gebracht wird, und
- Befestigen (S4) des zweiten Befestigungsmittels (7), um das Befestigungselement (4) in der Aussparung (5) des Batteriemoduls (2) zu befestigen.

6. Verfahren nach Anspruch 5, wobei das Befestigungselement (4) plattenförmig ist.

7. Verfahren nach einem der Ansprüche 5-6, wobei das erste Befestigungsmittel (6) ein erstes mit Gewinde versehenes Befestigungsmittel umfasst und wobei das Befestigungselement (4) eine erste mit Gewinde versehene Öffnung (10) zur Aufnahme des ersten mit Gewinde versehenen Befestigungsmittels (6) umfasst.

8. Verfahren nach einem der Ansprüche 6-7, wobei das zweite Befestigungsmittel (7) ein zweites mit Gewinde versehenes Befestigungsmittel umfasst, und wobei das Befestigungselement (4) eine zweite mit Gewinde versehene Öffnung (11) zur Aufnahme des zweiten mit Gewinde versehenen Befestigungsmittels umfasst.

9. Batteriepack für ein elektrisches Speichersystem, das Batteriepack umfassend
eine Batteriepackabdeckung (3),
ein Batteriemodul (2), und
eine Befestigungsvorrichtung (1), die Befestigungsvorrichtung (1) umfassend
ein Befestigungselement (4), wobei das Befestigungselement (4) in einer Aussparung (5) des Batteriemoduls (2) aufgenommen wird und aus dieser hervorsteht,
ein erstes Befestigungsmittel (6) zum Befestigen des Befestigungselements (4) an der Batteriepackabdeckung (3), und
ein zweites Befestigungsmittel (7) zum Befestigen des Befestigungselements (4) am Batteriemodul (2), um es in der Aussparung (5) des Batteriemoduls (2) zu sichern,
wobei eine Befestigungsrichtung (8) des ersten Befestigungsmittels (6) senkrecht zu einer Befestigungsrichtung (9) des zweiten Befestigungsmittels (7) ist, und
wobei das erste Befestigungsmittel (6) konfiguriert ist, um das Befestigungselement (5) in Kontakt mit der Batteriepackabdeckung (3) zu bringen.

10. Batteriepack nach Anspruch 9, wobei das erste Befestigungsmittel (6) ein erstes mit Gewinde versehenes Befestigungsmittel umfasst, wobei das Befestigungselement (4) eine erste mit Gewinde versehene Öffnung (10) zur Aufnahme des ersten Befestigungsmittels (6) umfasst, und wobei die Batteriepackabdeckung (3) ein erstes Durchgangsloch (12) zur Befestigung des ersten Befestigungsmittels (6) an der Batteriepackabdeckung (3) umfasst.

11. Batteriepack nach einem der Ansprüche 9-10, wobei das zweite Befestigungsmittel (7) ein zweites mit Gewinde versehenes Befestigungsmittel umfasst, wobei das Befestigungselement (4) eine zweite mit Gewinde versehene Öffnung (11) zur Aufnahme des zweiten mit Gewinde versehenen Befestigungsmittels umfasst, und wobei das Batteriemodul (2) ein zweites Durchgangsloch (13) zur Befestigung des zweiten mit Gewinde versehenen Befestigungsmittels an dem Batteriemodul (2) umfasst.

12. Batteriepack nach Anspruch 11, wobei eine Erweiterung des zweiten Durchgangslochs (13) eine Länge des zweiten Befestigungsmittels (6) in der ersten Befestigungsrichtung (8) übersteigt, um eine Befestigung des Befestigungselements (4) an verschiedenen Positionen innerhalb der Aussparung (5) des Batteriemoduls (2) zu ermöglichen.

13. Batteriepack nach einem der Ansprüche 9-12, ferner umfassend
ein erstes Eingriffselement (14), das am Batteriemodul angeordnet ist,
ein zweites Eingriffselement (15), das an der Batteriepackabdeckung angeordnet ist, und
ein drittes Befestigungsmittel (16),
wobei das erste Eingriffselement (14) so konfiguriert ist, dass es mit dem zweiten Eingriffselement (15) in Eingriff kommt, um das Batteriemodul (2) an der Batteriepackabdeckung (3) in einer ersten Batteriepackrichtung und einer zweiten Batteriepackrichtung zu befestigen, und
wobei sich das dritte Befestigungsmittel (16) durch das Batteriemodul (2) hindurch erstreckt, um das Batteriemodul (2) an der Batteriepackabdeckung (3) in einer dritten Batteriepackrichtung zu befestigen.

14. Elektrisches Speichersystem umfassend das Batteriepack nach Anspruch 9.

15. Fahrzeug umfassend ein elektrisches Speichersystem nach Anspruch 14.

## Revendications

1. Dispositif de fixation (1) configuré pour fixer un module de batterie (2) à un couvercle de bloc-batterie (3), le dispositif de fixation (1) comprenant
un élément de fixation (4) conçu pour être reçu à l'intérieur d'un évidement (5) du module de batterie (2) et en faire saillie,
un premier élément de fixation (6) conçu pour fixer l'élément de fixation (4) au couvercle (3) du bloc-batterie, et
une seconde attache (7) conçue pour fixer l'élément de fixation (4) au module de batterie (2), pour la fixation dans l'évidement (5) du module de batterie (2),
une direction de fixation (8) de la première attache (6) étant perpendiculaire à une direction de fixation (9) de la seconde attache (7), et
la première attache (6) étant configurée pour amener l'élément de fixation (4) en contact avec le couvercle (3) du bloc-batterie.

2. Dispositif de fixation (1) selon la revendication 1, dans lequel l'élément de fixation (4) est en forme de plaque.

3. Dispositif de fixation (1) selon l'une quelconque des revendications 1 et 2, dans lequel la première attache (6) comprend une première attache filetée, et l'élément de fixation (4) comprend une première ouverture filetée (10) pour recevoir la première attache filetée.

4. Dispositif de fixation (1) selon l'une quelconque des revendications 1 à 3, dans lequel la seconde attache (7) comprend une seconde attache filetée, et l'élément de fixation (4) comprend une seconde ouverture filetée (11) pour recevoir la seconde attache filetée.

5. Procédé de fixation d'un module de batterie (2) à un couvercle de bloc-batterie (3), le procédé comprenant
- la prévision (S1) d'un couvercle de bloc-batterie (3), d'un module de batterie (2) et d'un dispositif de fixation (1), le dispositif de fixation (1) comprenant
un élément de fixation (4) conçu pour être reçu à l'intérieur d'un évidement (5) du module de batterie (2) et en faire saillie,
une première attache (6) conçue pour fixer l'élément de fixation (4) au couvercle de bloc-batterie (3), et
une seconde attache (7) conçue pour fixer l'élément de fixation (4) au module de batterie (2), pour blocage dans l'évidement (5) du module de batterie (2),
- la disposition (S2) de l'élément de fixation (4) du dispositif de fixation (1) dans l'évidement (5) du module de batterie (2), en permettant à une partie de l'élément de fixation (4) de dépasser de l'évidement,
- la fixation (S3) de la première attache (6), en amenant ainsi l'élément de fixation (4) en contact avec le couvercle du bloc-batterie (3), et
- la fixation (S4) de la seconde attache (7) pour fixer l'élément de fixation (4) dans l'évidement (5) du module de batterie (2).

6. Procédé selon la revendication 5, dans lequel l'élément de fixation (4) est en forme de plaque.

7. Procédé selon l'une quelconque des revendications 5 à 6, dans lequel la première attache (6) comprend une première attache filetée, et l'élément de fixation (4) comprend une première ouverture filetée (10) pour recevoir la première attache filetée (6).

8. Procédé selon l'une quelconque des revendications 6 à 7, dans lequel la seconde attache (7) comprend une seconde attache filetée, et l'élément de fixation (4) comprend une seconde ouverture filetée (11) pour recevoir la seconde attache filetée.

9. Bloc-batterie pour système de stockage électrique, le bloc-batterie comprenant
un couvercle de bloc batterie (3),
un module de batterie (2), et
un dispositif de fixation (1), le dispositif de fixation (1) comprenant
un élément de fixation (4), l'élément de fixation (4) étant reçu à l'intérieur d'un évidement (5) du module de batterie (2) et faisant saillie de celui-ci,
une première attache (6) pour fixer l'élément de fixation (4) au couvercle de bloc-batterie (3), et
une seconde attache (7) pour fixer l'élément de fixation (4) au module de batterie (2), pour blocage dans l'évidement (5) du module de batterie (2),
une direction de fixation (8) de la première attache (6) étant perpendiculaire à une direction de fixation (9) de la seconde attache (7), et
la première attache (6) étant configurée pour amener l'élément de fixation (5) en contact avec le couvercle du bloc-batterie (3).

10. Bloc-batterie selon la revendication 9, dans lequel la première attache (6) comprend une première attache filetée, l'élément de fixation (4) comprend une première ouverture filetée (10) pour recevoir la première attache (6), et le couvercle de bloc-batterie (3) comprend un premier trou traversant (12) pour fixer la première attache (6) au couvercle de bloc-batterie (3) .

11. Bloc-batterie selon l'une quelconque des revendications 9 à 10, dans lequel la seconde attache (7) comprend une seconde attache filetée, l'élément de fixation (4) comprend une seconde ouverture filetée (11) pour recevoir la seconde attache filetée, et le module de batterie (2) comprend un second trou traversant (13) pour fixer la seconde attache filetée au module de batterie (2).

12. Bloc-batterie selon la revendication 11, dans lequel une extension du second trou traversant (13) dépasse une longueur de la seconde attache (6) dans la première direction de fixation (8) pour permettre la fixation de l'élément de fixation (4) à différentes positions à l'intérieur de l'évidement (5) du module de batterie (2) .

13. Bloc-batterie selon l'une quelconque des revendications 9-12 comprenant en outre
un premier élément d'engagement (14) disposé au niveau du module de batterie,
un second élément d'engagement (15) disposée au niveau du couvercle du bloc-batterie, et
une troisième attache (16),
le premier élément d'engagement (14) étant configuré pour s'engager dans le second élément d'engagement (15) pour fixer le module de batterie (2) au couvercle de bloc-batterie (3) dans une première direction du bloc-batterie et une seconde direction du bloc-batterie, et
la troisième attache (16) s'étendant à travers le module de batterie (2) pour fixer le module de batterie (2) au couvercle de bloc-batterie (3) dans une troisième direction de bloc-batterie.

14. Système de stockage électrique comprenant le bloc-batterie selon la revendication 9.

15. Véhicule comprenant le système de stockage électrique selon la revendication 14.
